# EUROPEAN PATENT SPECIFICATION

(11) **EP 3 300 316 B1**
(45) Date of publication and mention of the grant of the patent: **26.06.2019**
(21) Application number: 17183717.2
(22) Date of filing: 28.07.2017
(51) Int. Cl.: H04L 12/26, H04L 12/935, H04L 12/721, H04L 12/707, H04L 12/717

(54) **DETERMINISTIC CONTROLLER-BASED PATH QUERY**
DETERMINISTISCHE STEUERGERÄTEBASIERTE WEGABFRAGE
INTERROGATION DE TRAJET BASÉE SUR UN CONTRÔLEUR DÉTERMINISTE

(30) Priority: 30.08.2016 US 201615252147
(43) Date of publication of application: 28.03.2018
(73) Proprietor: Cisco Technology, Inc., San Jose, CA 95134-1706 (US)
(72) Inventor: NAINAR, Nagendra Kumar, San Jose, CA 95134 (US); PIGNATARO, Carlos M., San Jose, CA 95134 (US); KUMAR, Deepak, San Jose, CA 95134 (US); YANG, Yi, San Jose, CA 95134 (US)
(74) Representative: Noble, Nicholas

(56) References cited:
- WO-A1-2012/056404
- US-A1- 2011 142 056
- US-A1- 2015 032 871
- FARREL OLD DOG CONSULTING J-P VASSEUR CISCO SYSTEMS A ET AL: "A Path Computation Element (PCE)-Based Architecture; rfc4655.txt", A PATH COMPUTATION ELEMENT (PCE)?-BASED ARCHITECTURE; RFC4655.TXT, INTERNET ENGINEERING TASK FORCE, IETF; STANDARD, INTERNET SOCIETY (ISOC) 4, RUE DES FALAISES CH- 1205 GENEVA, SWITZERLAND, 31 August 2006 (2006-08-31), XP015047407,

## Description

### TECHNICAL FIELD

The disclosed technology relates to methods and systems for identifying optimal network paths for traffic flows and in particular, for using a network controller to help identify deterministic Equal-Cost Multi-Path (ECMP) routes with respect to one or more egress nodes in a communication pathway.

### BACKGROUND

ECMP is a routing strategy where next-hop packet forwarding to a destination can occur over multiple "best paths" that tie for top place in routing metric calculations. Multi-path routing can be used in conjunction with most routing protocols because it is a per-hop decision limited to a single router. It can substantially increase bandwidth by load-balancing traffic over multiple paths; however, there may be significant problems in deploying it in practice. An example of path computation method is described in document XP015047407.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1 depicts a simplified network diagram in which an Operations Administration and Management (OAM) server can be implemented to provide path calculation information, according to some aspects of the technology.
FIG. 2 illustrates an example signal-timing diagram that depicts signaling between various network entities when performing routing metric calculations.
FIG. 3 illustrates an example network topology that spans various network environment types.
FIG. 4 illustrates an example network device.
FIGs. 5A and 5B illustrate example system embodiments that can be used to implement various network-based devices.

### DESCRIPTION OF EXAMPLE EMBODIMENTS

Various embodiments of the disclosure are discussed in detail below. While specific implementations are discussed, it should be understood that this is done for illustration purposes only. A person skilled in the relevant art will recognize that other components and configurations can be used without parting from the scope of the disclosure. The invention is defined by the appendent claims.

### Overview:

In some aspects, the subject technology relates to methods for identifying network routes, which can include steps for transmitting a first query to a network controller, the first query identifying a destination node for a traffic flow routed by the first network node, wherein the first query is configured to cause the network controller perform operations including: identify at least one egress node between the first network node and the destination node, transmit a second query to the at least one egress node to determine entropy information relative to the egress node, and transmit the entropy information to the first network node in response to the first query.

### Example Embodiments:

One limitation of conventional ECMP implementations is the deployment of static routing algorithms that fail to consider network topology and/or traffic flow dynamics. Because static routing systems are unable to make a priori determinations of downstream ECMP paths, the routing systems must make routing decisions that are constrained by local routing rules that frequently result is sub-optimal path routing decisions.

Aspects of the subject technology address the forgoing problems of static ECMP routing by providing systems and methods for making routing path decisions based on up-to-date network topology information and traffic parameters. In some approaches, the technology utilizes a network controller, such as an operations administration and management (OAM) controller or server, to coordinate the collection and distribution network information used for making the routing decisions.

In some aspects, a transmitting network node responsible for directing new traffic flows, e.g., to a predetermined network destination, can benefit from information about different network paths along the transmission route. In particular, the transmitting node may benefit from entropy information for one or more network paths, for example, spanning from one or more egress nodes along the communication path. In some implementations of the technology, new traffic flows can cause the transmitting node to transmit a query to a network controller (e.g., an OAM server), to prompt the controller's collection of entropy information from various egress points in the network. However, it is understood that other conditional events can cause a transmitting node to query an OAM controller for path calculation information, without departing from the scope of the technology.

In practice, the transmitting node can send a query (e.g., a first query) to the network controller, which includes a destination address for one or more traffic flows being routed by the transmitting node. With the destination address information and information about the network topology, the controller can determine the location of one or more egress nodes for which entropy path calculation information may be relevant. The network controller can then send a query (e.g., a second query) to each of the one or more egress nodes to request entropy information for one or more paths from each egress node to the network destination. Entropy information for the various path calculations is then communicated from the controller back to the transmitting node, thereby permitting the transmitting node to make routing decisions for one or more traffic flows that are based on up-to-date network topology and traffic flow conditions.

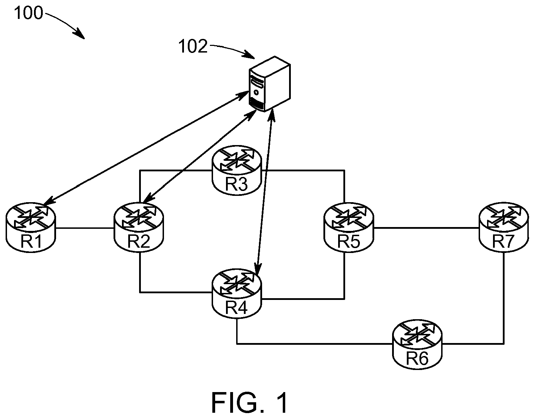

FIG. 1 depicts a simplified network diagram in which an OAM server 102 can be implemented to provide path calculation information relating to one or more egress nodes of network 100.

Network 100 includes multiple interconnected network nodes (e.g., R1-R7). In the example of FIG. 1, node R1 is configured for receiving new traffic flows, which are directed to a network destination at node R7. As is apparent from the topology of network 100, node R2 and node R4 represent egress nodes on the communication pathway between R1 and R7. That is, egress nodes R2 and R4 can each provide at least two network paths on which traffic flows can be directed from R1 to their destination node at R7.

As discussed above, it would be advantageous for node R1 to make a priori determinations regarding optimal network routes that should be used for a given traffic flow. According to some aspects of the technology, upon receiving a new traffic flow, node R1 issues a query (e.g., a first query) to OAM server 102. Although the first query can include various types of information (depending on the desired implementation), at a minimum the first query contains a destination address for the traffic flow for which the query is made. That is, node R1 provides a destination address of node R7 to OAM server 102.

After receiving the first query, OAM server 102 identifies one or more egress nodes on the communication path between R1 and the desired destination node, e.g., node R7. In the present example, the egress nodes are identified as node R2 and node R4. It is understood that the identification of egress nodes by OAM server 102 can be based on network topology information that is directly collected by OAM server 102. By way of example, OAM server 102 can be configured to collect topology information using a border gateway protocol (BGP), such as BGP-link state (e.g., BPG-LS), a network topology YANG model, and/or by participation using an interior gateway protocol (IGP), or the like.

Subsequently, OAM server 102 issues a query (e.g., a second query) to each of the identified egress nodes, i.e., nodes R2 and R4, to solicit network connectivity information that identifies one or more quality metrics with respect to the egress node's connectivity to node R7. In some aspects, receipt of the second query by each of the egress nodes (e.g., R2 and R4), causes each of the respective egress nodes to perform their own path calculations with respect to target network destination, i.e., R7.

The solicited network connectivity information can be in the form of entropy information, for example, that identifies an amount of entropy for various network paths between the respective egress node and the network destination. Further to the example of FIG. 1, OAM server 102 requests entropy information from node R2, i.e., identifying an amount of entropy for the various connections between node R2 and node R7. Similarly, the second query solicits entropy information from node R4, i.e., identify an amount of entropy for the various connections between node R4 and node R7.

In response to the second query, each of the egress nodes (e.g. node R2 and node R4) transmit a reply (e.g., an "egress reply") to OAM server 102, indicating their entropy calculations with respect to their various network paths to R7. Subsequently, OAM server 102 issues its reply (e.g., a controller reply) back to node R1 which contains the entropy information reported to OAM server 102 by egress nodes R2 and R4.

Using the entropy information for the various egress nodes along the communication path to node R7, node R1 can direct traffic flows in a manner that optimizes traffic quality and/or speed. In some aspects, routing may be performed by R1 in a manner that load balances traffic flows over the network, for example, at the direction of an administrator or network operator in control of OAM server 102.

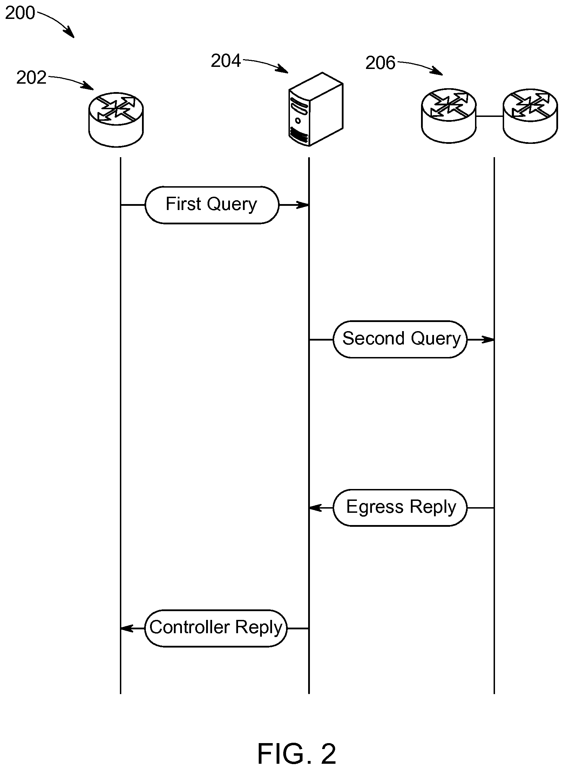

FIG. 2 illustrates an example timing diagram 200 that depicts signaling between network entities used to implement various aspects of the technology.

As depicted in the example of FIG. 2, timing diagram 200 includes a first network node 202, a controller 204, and one or more egress nodes 206. It is understood that controller 204 can be (or can include) and OAM server, such as OAM server 102, discussed above. However, controller 204 can also include any hardware and/or software modules that can be implemented to receive, store, and/or detect network topology configurations of an associated computer network.

Similar to the example illustrated in FIG. 1, first network node 202 can be any node (e.g., switch or router, etc.) responsible for directing traffic flows through a computer network. As illustrated in FIG. 2, first network node 202 initiates communication by transmitting a first query to controller 204.

The transmission of the first query to controller 204 can be performed in response to certain conditions or changes with respect to the associated computer network. For example, network node 202 can send a first query to controller 204 in response to the receipt of a new traffic flow. In other implementations, the first query may be sent by network node 202 in response to detected changes in the network topology, and/or in response to the occurrence of a predetermined event, such as a lapsing of a predetermined countdown or time interval.

As discussed above, the first query can include any data or information that can be used to facilitate the discovery of egress nodes in the network by controller 204. By way of example, the first query can include a destination address for one or more traffic flows so that controller 204 can identify (using the topology information), one or more egress nodes along a communication path between network node 202 and the desired destination for the one or more traffic flows.

After receiving the first query, controller 204 identifies relevant egress nodes in the communication path (e.g., using the destination address provided by the first query), and issues a second query that is transmitted to each of the identified one or more egress nodes 206.

The second query can be configured to cause each of the receiving egress nodes to perform one or more path calculation functions, for example, to determine the egress node's quality of connection via different paths to the network destination. In some aspects, entropy calculations are performed, for example, with respect to network routes between the calculating egress node and the network destination. Subsequently, the one or more egress nodes 206 each reply (e.g., with an egress reply) to controller 204, providing information that identifies their entropy calculations with regard to their respective communication path to the network destination.

After controller 204 receives the egress replies, controller 204 then issues a controller reply back to network node 202, e.g., indicating the various entropy information that was reported by one or more egress nodes 206. Using the entropy information received from controller 204, network node 202 can update one or more routing tables used perform traffic forwarding/routing for one or more traffic flows handled by network node 202.

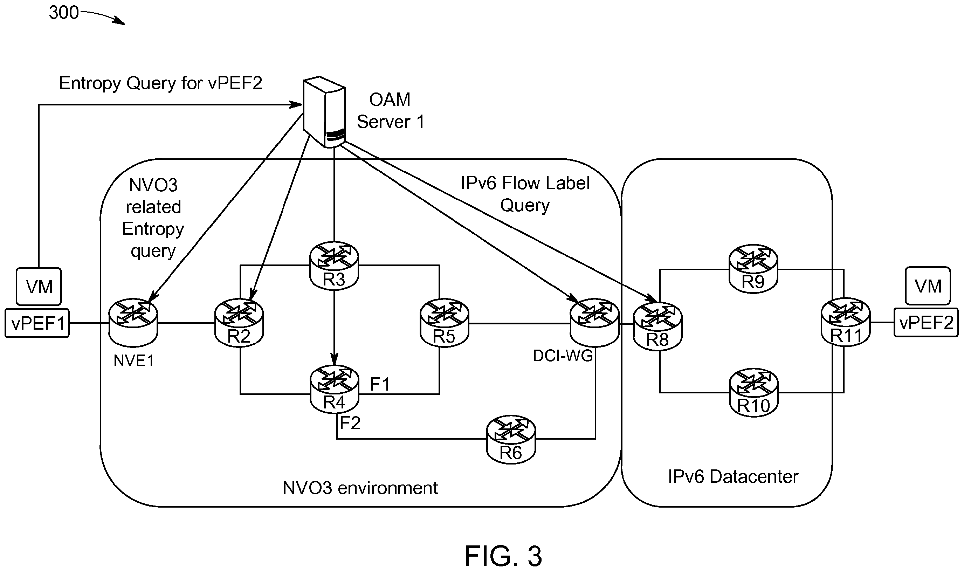

By determining traffic flow metrics for the various egress nodes along a communication path to the desire destination, network node 202 can more efficiently route traffic through the network. It is understood that the type of entropy information collected by controller 204 can vary depending upon network environment. As discussed in further detail below with respect to FIG. 3, path calculation information can be environment specific, however, the reporting of path calculation information to the relevant OAM controller can be performed independent from the implemented network environment.

FIG. 3 illustrates an example network topology 300 that spans different network environments, including a Network Virtualization Overlay (e.g., an NVO3 environment), and an IPv6 datacenter.

In the example network topology 300, traffic origination and destination nodes are represented by virtual PE forwarders that sit at the edge of different network environments. Specifically, vPEF1 represents an origination node from which various traffic flows will be injected into network 300, and vPEF2 represents the network destination of the flows transmitted by vPEF1.

Further to the above examples, in order to discover optimal path routes through network 300, vPEF1 sends a query to OAM server 1, e.g., to request entropy information for various network paths leading to destination vPEF2.

After the query is received by OAM server 1, the server identifies multiple egress nodes along the communication path between vPEF1 and vPEF2, inquiries each of the egress nodes to request path calculation/entropy information from each.

In the provided example, OAM server 1 identifies nodes NVE1, R2, R4 and OCI-GW, as egress nodes in the NVO3 environment. Similarly, node R8 is identified is the only egress node in the IPv6 data center environment. Consequently the queries issued from OAM server 1 to each of the egress nodes is structured to request path calculation information that is specific to the environmental context of the receiving egress node. For example, each of the egress nodes in the NVO3 environment receive queries that request NVO3 related entropy information. Similarly, the egress node in the IPv6 data center environment received a query from OAM server 1 requesting IPv6 flow label information. Although only two network environments are represented in the example of FIG. 3, it is understood that a fewer number (or greater number) of network environments may be implemented, without departing from the scope of the technology.

As discussed above with respect to the examples illustrated by FIG. 1, and FIG. 2, the various egress nodes in network 300 transmit their respective path calculation (e.g., entropy information) back to OAM server 1. In turn, OAM server 1 provides the entropy information back to vPEF1, permitting vPEF1 to optimize network path routing for one or more data flows traversing network 300.

### Example Devices:

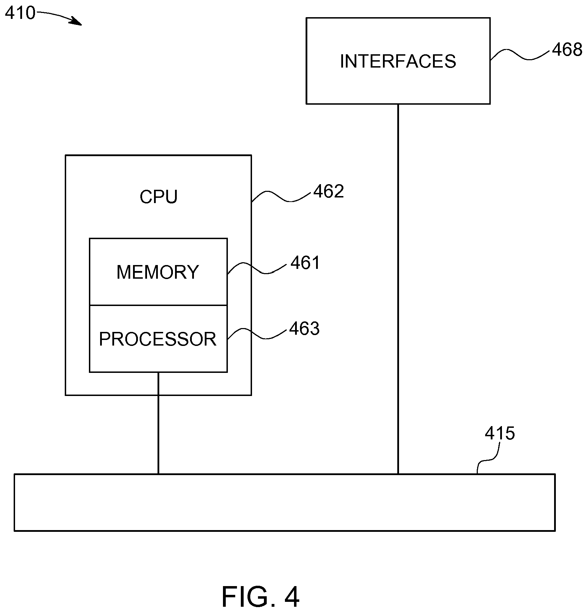

FIG. 4 illustrates an example network device 410. Network device 410 includes a master central processing unit (CPU) 462, interfaces 468, and a bus 415 (*e.g.,* a PCI bus). When acting under the control of appropriate software or firmware, the CPU 462 is responsible for executing packet management, error detection, and/or routing functions. The CPU 462 preferably accomplishes all these functions under the control of software including an operating system and any appropriate applications software. CPU 462 may include one or more processors 463 such as a processor from the Motorola family of microprocessors or the MIPS family of microprocessors. In an alternative embodiment, processor 463 is specially designed hardware for controlling the operations of router 410. In a specific embodiment, a memory 461 (such as non-volatile RAM and/or ROM) also forms part of CPU 462. However, there are many different ways in which memory could be coupled to the system.

The interfaces 468 are typically provided as interface cards (sometimes referred to as "line cards"). Generally, they control the sending and receiving of data packets over the network and sometimes support other peripherals used with the router 410. Among the interfaces that may be provided are Ethernet interfaces, frame relay interfaces, cable interfaces, DSL interfaces, token ring interfaces, and the like. In addition, various very high-speed interfaces may be provided such as fast token ring interfaces, wireless interfaces, Ethernet interfaces, Gigabit Ethernet interfaces, ATM interfaces, HSSI interfaces, POS interfaces, FDDI interfaces and the like. Generally, these interfaces may include ports appropriate for communication with the appropriate media. In some cases, they may also include an independent processor and, in some instances, volatile RAM. The independent processors may control such communications intensive tasks as packet switching, media control and management. By providing separate processors for the communications intensive tasks, these interfaces allow the master microprocessor 462 to efficiently perform routing computations, network diagnostics, security functions, etc.

Although the system shown in FIG. 4 is one specific network device of the present invention, it is by no means the only network device architecture on which the present invention can be implemented. For example, an architecture having a single processor that handles communications as well as routing computations, etc. is often used. Further, other types of interfaces and media could also be used with the router.

Regardless of the network device's configuration, it may employ one or more memories or memory modules (including memory 461) configured to store program instructions for the general-purpose network operations and mechanisms for roaming, route optimization and routing functions described herein. The program instructions may control the operation of an operating system and/or one or more applications, for example. The memory or memories may also be configured to store tables such as mobility binding, registration, and association tables, etc.

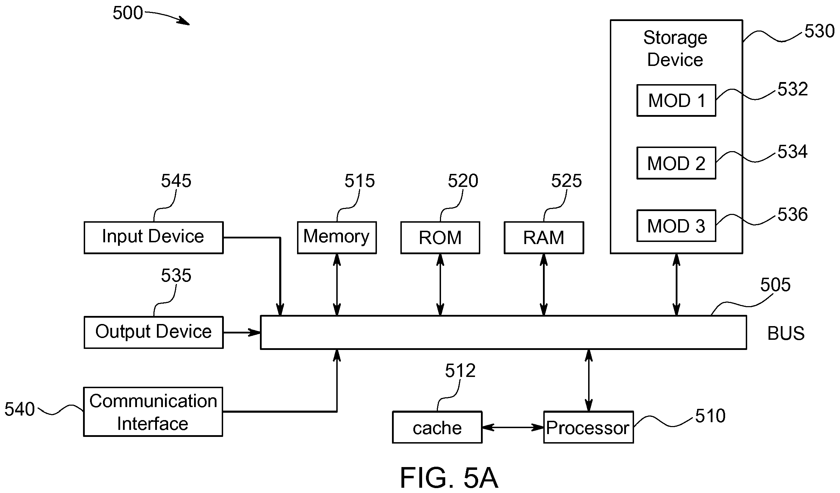

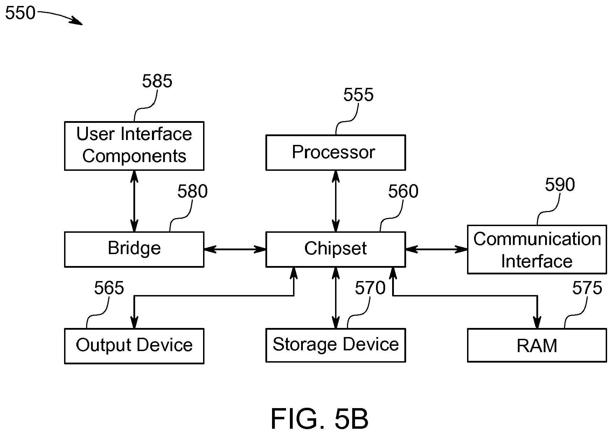

FIG. 5A and FIG. 5B illustrate example system embodiments. The more appropriate embodiment will be apparent to those of ordinary skill in the art when practicing the present technology. Persons of ordinary skill in the art will also readily appreciate that other system embodiments are possible.

FIG. 5A illustrates a conventional system bus computing system architecture 500 wherein the components of the system are in electrical communication with each other using a bus 505. Exemplary system 500 includes a processing unit (CPU or processor) 510 and a system bus 505 that couples various system components including the system memory 515, such as read only memory (ROM) 520 and random access memory (RAM) 525, to the processor 510. The system 500 can include a cache of high-speed memory connected directly with, in close proximity to, or integrated as part of the processor 510. The system 500 can copy data from the memory 515 and/or the storage device 530 to the cache 512 for quick access by the processor 510. In this way, the cache can provide a performance boost that avoids processor 510 delays while waiting for data. These and other modules can control or be configured to control the processor 510 to perform various actions. Other system memory 515 may be available for use as well. The memory 515 can include multiple different types of memory with different performance characteristics. The processor 510 can include any general purpose processor and a hardware module or software module, such as module 1 532, module 2 534, and module 3 536 stored in storage device 530, configured to control the processor 510 as well as a special-purpose processor where software instructions are incorporated into the actual processor design. The processor 510 may essentially be a completely self-contained computing system, containing multiple cores or processors, a bus, memory controller, cache, etc. A multi-core processor may be symmetric or asymmetric.

To enable user interaction with the computing device 500, an input device 545 can represent any number of input mechanisms, such as a microphone for speech, a touch-sensitive screen for gesture or graphical input, keyboard, mouse, motion input, speech and so forth. An output device 535 can also be one or more of a number of output mechanisms known to those of skill in the art. In some instances, multimodal systems can enable a user to provide multiple types of input to communicate with the computing device 500. The communications interface 540 can generally govern and manage the user input and system output. There is no restriction on operating on any particular hardware arrangement and therefore the basic features here may easily be substituted for improved hardware or firmware arrangements as they are developed.

Storage device 530 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 525, read only memory (ROM) 520, and hybrids thereof.

The storage device 530 can include software modules 532, 534, 536 for controlling the processor 510. Other hardware or software modules are contemplated. The storage device 530 can be connected to the system bus 505. In one aspect, a hardware module that performs a particular function can include the software component stored in a computer-readable medium in connection with the necessary hardware components, such as the processor 510, bus 505, display 535, and so forth, to carry out the function.

FIG. 5B illustrates an example computer system 550 having a chipset architecture that can be used in executing the described method and generating and displaying a graphical user interface (GUI). Computer system 550 is an example of computer hardware, software, and firmware that can be used to implement the disclosed technology. System 550 can include a processor 555, representative of any number of physically and/or logically distinct resources capable of executing software, firmware, and hardware configured to perform identified computations. Processor 555 can communicate with a chipset 560 that can control input to and output from processor 555. In this example, chipset 560 outputs information to output device 565, such as a display, and can read and write information to storage device 570, which can include magnetic media, and solid state media, for example. Chipset 560 can also read data from and write data to RAM 575. A bridge 580 for interfacing with a variety of user interface components 585 can be provided for interfacing with chipset 560. Such user interface components 585 can include a keyboard, a microphone, touch detection and processing circuitry, a pointing device, such as a mouse, and so on. In general, inputs to system 550 can come from any of a variety of sources, machine generated and/or human generated.

Chipset 560 can also interface with one or more communication interfaces 590 that can have different physical interfaces. Such communication interfaces can include interfaces for wired and wireless local area networks, for broadband wireless networks, as well as personal area networks. Some applications of the methods for generating, displaying, and using the GUI disclosed herein can include receiving ordered datasets over the physical interface or be generated by the machine itself by processor 555 analyzing data stored in storage 570 or 575. Further, the machine can receive inputs from a user via user interface components 585 and execute appropriate functions, such as browsing functions by interpreting these inputs using processor 555.

It can be appreciated that example systems 500 and 550 can have more than one processor 510 or be part of a group or cluster of computing devices networked together to provide greater processing capability.

For clarity of explanation, in some instances the present technology may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims. Moreover, claim language reciting "at least one of' a set indicates that one member of the set or multiple members of the set satisfy the claim.

## Claims

1. A computer-implemented method for identifying one or more network routes, the method comprising:
transmitting, by a first network node (202), a first query to a network controller, the first query identifying a destination node for a traffic flow routed by the first network node, and wherein the first query is characterized to cause the network controller to perform operations comprising:
identifying at least one egress node between the first network node and the destination node; transmitting a second query to the at least one egress node to determine entropy information relative to the egress node, wherein the entropy information is based on a quality of connectivity between the egress node and the destination node; and
transmitting the entropy information to the first network node in response to the first query.

2. The computer-implemented method of claim 1, further comprising:
updating a routing table for the first network node, based on the entropy information received from the network controller.

3. The computer-implemented method of claim 1 or 2, further comprising:
routing, by the first network node, the traffic flow via the at least one egress node based on the entropy information.

4. The computer-implemented method of claim 1, 2, or 3, wherein transmitting the first query to the network controller is performed by the first network node in response to receiving a new traffic flow.

5. The computer-implemented method of any of claims 1 to 3, wherein transmitting the first query to the network controller is performed in response to a detected change in a network topology.

6. The computer-implemented method of any of claims 1 to 3, wherein transmitting the first query to the network controller is performed in response to an expiration of a predetermined timeout period.

7. The computer-implemented method of any preceding claim, wherein the entropy information is based on a measure of available bandwidth between the egress node and the destination node.

8. A network switch comprising:
at least one processor;
a memory device storing instructions that, when executed by the at least one processor, cause the processor to perform operations comprising:
transmitting, by the network switch (202), a first query to a network controller, the first query identifying a destination node for a traffic flow routed by the network switch, and wherein the first query is characterized to cause the network controller to perform operations comprising:
identify at least one egress node between the network switch and the destination node;
transmit a second query to the at least one egress node to determine entropy information relative to the egress node, wherein the entropy information is based on a quality of connectivity between the egress node and the destination node; and
transmit the entropy information to the network switch in response to the first query.

9. The network switch of claim 8, further comprising:
updating a routing table for the network switch, based on the entropy information received from the network controller.

10. The network switch of claim 8 or 9, further comprising:
routing, by the network switch, the traffic flow via the at least one egress node based on the entropy information.

11. The network switch of claim 8, 9, or 10, wherein transmitting the first query to the network controller is performed by the network switch in response to receiving a new traffic flow.

12. The network switch of any of claims 8 to 10, wherein transmitting the first query to the network controller is performed in response to a detected change in a network topology.

13. The network switch of any of claims 8 to 10, wherein transmitting the first query to the network controller is performed in response to an expiration of a predetermined timeout period.

14. The network switch of any of claims 8 to 13, wherein the entropy information is based on a measure of available bandwidth between the egress node and the destination node.

15. A non-transitory computer-readable storage medium comprising instructions stored therein, which when executed by one or more processors, cause the processors to perform the method of any of claims 1 to 7.

## Patentansprüche

1. Computerimplementiertes Verfahren zum Identifizieren einer oder mehrerer Netzwerkrouten, wobei das Verfahren Folgendes aufweist:
Übertragen einer ersten Abfrage an eine Netzwerksteuerung durch einen ersten Netzwerkknoten (202), wobei die erste Abfrage einen Zielknoten für einen Verkehrsfluss identifiziert, der durch den ersten Netzwerkknoten geleitet wird, und wobei die erste Abfrage **dadurch gekennzeichnet ist, dass** sie die Netzwerksteuerung veranlasst, Operationen durchzuführen, aufweisend:
Identifizieren mindestens eines Ausgangsknotens zwischen dem ersten Netzwerkknoten und dem Zielknoten;
Übertragen einer zweiten Abfrage an den mindestens einen Ausgangsknoten, um Entropieinformationen bezüglich des Ausgangsknotens zu bestimmen, wobei die Entropieinformationen auf einer Verbindungsqualität zwischen dem Ausgangsknoten und dem Zielknoten basieren; und
Übertragen der Entropieinformationen an den ersten Netzwerkknoten als Antwort auf die erste Abfrage.

2. Computerimplementiertes Verfahren nach Anspruch 1, ferner aufweisend:
Aktualisieren einer Routingtabelle für den ersten Netzwerkknoten basierend auf den von der Netzwerksteuerung empfangenen Entropieinformationen.

3. Computerimplementiertes Verfahren nach Anspruch 1 oder 2, ferner aufweisend:
leiten des Verkehrsflusses über den mindestens einen Ausgangsknoten basierend auf den Entropieinformationen durch den ersten Netzwerkknoten.

4. Computerimplementiertes Verfahren nach Anspruch 1, 2 oder 3, wobei das Übertragen der ersten Abfrage an die Netzwerksteuerung durch den ersten Netzwerkknoten als Antwort auf das Empfangen eines neuen Verkehrsflusses durchgeführt wird.

5. Computerimplementiertes Verfahren nach einem der Ansprüche 1 bis 3, wobei das Übertragen der ersten Abfrage an die Netzwerksteuerung als Antwort auf eine erfasste Änderung in einer Netzwerktopologie durchgeführt wird.

6. Computerimplementiertes Verfahren nach einem der Ansprüche 1 bis 3, wobei das Übertragen der ersten Abfrage an die Netzwerksteuerung als Antwort auf einen Ablauf einer vorbestimmten Zeitüberschreitung durchgeführt wird.

7. Computerimplementiertes Verfahren nach einem der vorhergehenden Ansprüche, wobei die Entropieinformationen auf einem Maß der verfügbaren Bandbreite zwischen dem Ausgangsknoten und dem Zielknoten basieren.

8. Netzwerk-Switch, aufweisend:
mindestens einen Prozessor;
eine Speichervorrichtung, die Anweisungen speichert, die bei Ausführung durch den mindestens einen Prozessor den Prozessor veranlassen, Operationen durchzuführen, aufweisend:
Übertragen einer ersten Abfrage an eine Netzwerksteuerung durch den Netzwerk-Switch (202), wobei die erste Abfrage einen Zielknoten für einen Verkehrsfluss identifiziert, der durch den Netzwerk-Switch geleitet wird, und wobei die erste Abfrage **dadurch gekennzeichnet ist, dass** sie die Netzwerksteuerung veranlasst, Operationen durchzuführen, aufweisend:
Identifizieren mindestens eines Ausgangsknotens zwischen dem Netzwerk-Switch und dem Zielknoten;
Übertragen einer zweiten Abfrage an den mindestens einen Ausgangsknoten, um Entropieinformationen bezüglich des Ausgangsknotens zu bestimmen, wobei die Entropieinformationen auf einer Verbindungsqualität zwischen dem Ausgangsknoten und dem Zielknoten basieren; und
Übertragen von Entropieinformationen an den Netzwerk-Switch als Antwort auf die erste Abfrage.

9. Netzwerk-Switch nach Anspruch 8, ferner aufweisend:
Aktualisieren einer Routingtabelle für den Netzwerk-Switch basierend auf den von der Netzwerksteuerung empfangenen Entropieinformationen.

10. Netzwerk-Switch nach Anspruch 8 oder 9, ferner aufweisend:
leiten des Verkehrsflusses über den mindestens einen Ausgangsknoten basierend auf den Entropieinformationen durch den Netzwerk-Switch.

11. Netzwerk-Switch nach Anspruch 8, 9 oder 10, wobei das Übertragen der ersten Abfrage an die Netzwerksteuerung durch den Netzwerk-Switch als Antwort auf das Empfangen eines neuen Verkehrsflusses durchgeführt wird.

12. Netzwerk-Switch nach einem der Ansprüche 8 bis 10, wobei das Übertragen der ersten Abfrage an die Netzwerksteuerung als Antwort auf eine erfasste Änderung in einer Netzwerktopologie durchgeführt wird.

13. Netzwerk-Switch nach einem der Ansprüche 8 bis 10, wobei das Übertragen der ersten Abfrage an die Netzwerksteuerung als Antwort auf einen Ablauf einer vorbestimmten Zeitüberschreitung durchgeführt wird.

14. Netzwerk-Switch nach einem der Ansprüche 8 bis 13, wobei die Entropieinformationen auf einem Maß der verfügbaren Bandbreite zwischen dem Ausgangsknoten und dem Zielknoten basieren.

15. Nicht-transitorisches computerlesbares Speichermedium, welches darin gespeicherte Anweisungen aufweist, die, wenn sie durch einen oder mehrere Prozessoren ausgeführt werden, bewirken, dass die Prozessoren das Verfahren nach einem der Ansprüche 1 bis 7 ausführen.

## Revendications

1. Procédé mis en oeuvre par ordinateur permettant d'identifier une ou plusieurs routes de réseau, le procédé comprenant :
la transmission, par un premier noeud de réseau (202), d'une première demande à un contrôleur de réseau, la première demande identifiant un noeud de destination pour un flux de trafic acheminé par le premier noeud de réseau, et la première demande étant **caractérisée en ce qu'**elle amène le contrôleur de réseau à exécuter des opérations comprenant :
l'identification d'au moins un noeud de sortie entre le premier noeud de réseau et le noeud de destination ;
la transmission d'une seconde demande à l'au moins un noeud de sortie pour déterminer des informations d'entropie relatives au noeud de sortie, les informations d'entropie étant basées sur une qualité de connectivité entre le noeud de sortie et le noeud de destination ; et
la transmission des informations d'entropie au premier noeud de réseau en réponse à la première demande.

2. Procédé mis en oeuvre par ordinateur selon la revendication 1, comprenant en outre :
la mise à jour d'une table de routage pour le premier noeud de réseau, sur la base des informations d'entropie provenant du contrôleur de réseau.

3. Procédé mis en oeuvre par ordinateur selon la revendication 1 ou 2, comprenant en outre :
le routage, par le premier noeud de réseau, du flux de trafic par l'intermédiaire de l'au moins un noeud de sortie sur la base des informations d'entropie.

4. Procédé mis en oeuvre par ordinateur selon la revendication 1, 2 ou 3, dans lequel la transmission de la première demande au contrôleur de réseau est exécutée par le premier noeud de réseau en réponse à la réception d'un nouveau flux de trafic.

5. Procédé mis en oeuvre par ordinateur selon l'une quelconque des revendications 1 à 3, dans lequel la transmission de la première demande au contrôleur de réseau est exécutée en réponse à un changement détecté dans une topologie de réseau.

6. Procédé mis en oeuvre par ordinateur selon l'une quelconque des revendications 1 à 3, dans lequel la transmission de la première demande au contrôleur de réseau est exécutée en réponse à une expiration d'une période prédéterminée de temporisation.

7. Procédé mis en oeuvre par ordinateur selon l'une quelconque des revendications précédentes, dans lequel les informations d'entropie sont basées sur une mesure de bande passante disponible entre le noeud de sortie et le noeud de destination.

8. Commutateur de réseau comprenant :
au moins un processeur ;
un dispositif de mémoire stockant des instructions qui, lorsqu'elles sont exécutées par l'au moins un processeur, entraînent l'exécution par le processeur d'opérations comprenant :
la transmission, par le commutateur de réseau (202), d'une première demande à un contrôleur de réseau, la première demande identifiant un noeud de destination pour un flux de trafic acheminé par le commutateur de réseau, et la première demande étant **caractérisée en ce qu'**elle amène le contrôleur de réseau à exécuter des opérations comprenant :
l'identification d'au moins un noeud de sortie entre le commutateur de réseau et le noeud de destination ;
la transmission d'une seconde demande à l'au moins un noeud de sortie pour déterminer des informations d'entropie relatives au noeud de sortie, les informations d'entropie étant basées sur une qualité de connectivité entre le noeud de sortie et le noeud de destination ; et
la transmission des informations d'entropie au commutateur de réseau en réponse à la première demande.

9. Commutateur de réseau selon la revendication 8, comprenant en outre :
la mise à jour d'une table de routage pour le commutateur de réseau, sur la base des informations d'entropie provenant du contrôleur de réseau.

10. Commutateur de réseau selon la revendication 8 ou 9, comprenant en outre :
le routage, par le commutateur de réseau, du flux de trafic par l'intermédiaire de l'au moins un noeud de sortie sur la base des informations d'entropie.

11. Commutateur de réseau selon la revendication 8, 9 ou 10, dans lequel la transmission de la première demande au contrôleur de réseau est exécutée par le commutateur de réseau en réponse à la réception d'un nouveau flux de trafic.

12. Commutateur de réseau selon l'une quelconque des revendications 8 à 10, dans lequel la transmission de la première demande au contrôleur de réseau est exécutée en réponse à un changement détecté dans une topologie de réseau.

13. Commutateur de réseau selon l'une quelconque des revendications 8 à 10, dans lequel la transmission de la première demande au contrôleur de réseau est exécutée en réponse à une expiration d'une période prédéterminée de temporisation.

14. Commutateur de réseau selon l'une quelconque des revendications 8 à 13, dans lequel les informations d'entropie sont basées sur une mesure de bande passante disponible entre le noeud de sortie et le noeud de destination.

15. Support de stockage lisible par ordinateur non transitoire contenant des instructions qui, lorsqu'elles sont exécutées par un ou plusieurs processeurs, entraînent l'exécution par les processeurs du procédé selon l'une quelconque des revendications 1 à 7.
